# EUROPÄISCHE PATENTANMELDUNG

(11) **EP 3 569 434 A1**
(43) Veröffentlichungstag der Anmeldung: **20.11.2019**
(21) Anmeldenummer: 19171672.9
(22) Anmeldetag: 29.04.2019
(51) Int. Cl.: B60K 5/04, B60K 5/12

(54) **BEFESTIGUNGSEINRICHTUNG EINES HYBRID-ANTRIEBSAGGREGATS IN EINEM KRAFTFAHRZEUG**

(30) Priorität: 15.05.2018 DE 102018207485
(71) Anmelder: Bayerische Motoren Werke Aktiengesellschaft, 80809 München (DE)
(72) Erfinder: Lohse, Sebastian, 85221 Dachau (DE)

(57) **Zusammenfassung**

Nach der Erfindung ist Kraftfahrzeugantrieb mit einem Antriebsaggregat, bestehend wenigstens aus einem Verbrennungsmotor, einem Elektromotor, einem Getriebe, mit einer in Fahrzeugquerrichtung liegenden Abtriebswelle, und einem Hochvolt - Startergenerator, sowie mit einer Befestigungseinrichtung für das Antriebsaggregat, zu dessen schwingfähigem Festlegen an einer Karosserie und/oder einem Fahrwerk eines Kraftfahrzeugs, mittels Schwingungen dämpfenden Elementen, wovon wenigstens vier in Traglagern verbaut sind, dadurch gekennzeichnet, dass wenigstens ein Schwingungsdämpfer zwischen Antriebsaggregat und Karosserie oder Fahrwerk so eingebracht ist, dass dessen Schwingungsdämpfung, in Richtung einer Hochachse des Kraftfahrzeugs mit einer Dämpfungskennlinie wirkt, die so gestaltet ist, dass eine Dämpfungswirkung erfolgt für Schwingungen des Antriebsaggregats, angeregt durch Fahrbahnungleichförmigkeiten, während für Schwingungen, angeregt von Drehungleichförmigkeiten des Verbrennungsmotors und/oder Elektromotors, keine Dämpfungswirkung erfolgt.

## Beschreibung

Die Erfindung betrifft eine Befestigungseinrichtung für ein Hybrid - Antriebsaggregat mit wenigstens einem Elektromotor und einem Verbrennungsmotor an einer Karosserie und/oder an einem Fahrwerk eines Kraftfahrzeugs, nach dem Oberbegriff des ersten Anspruchs.

Es ist bekannt, ein elektrisches Antriebsaggregat als einzigen oder zusätzlichen Antrieb in ein wenigstens teilweise elektrisch angetriebenes Kraftfahrzeug einzubauen. Am häufigsten eingesetzt wird als elektrisches Antriebsaggregat, ein mit eventuell einem Getriebe und eventuell einem Differential gekoppelter Elektromotor, wobei die Getriebegehäuse und das Motorgehäuse zusammengebaut oder -geflanscht in einem Kraftfahrzeugaufbau angebracht sind. Solche Lagerungen für Elektromotor und/oder Getriebe für Kraftfahrzeuge sind in unterschiedlichsten Ausführungsformen bekannt. Sie können Schwingungen bzw. Relativbewegungen zwischen dem Antriebsaggregat und der Fahrzeug-Karosserie ermöglichen, jedoch sollen diese Relativbewegungen nicht nur gedämpft, sondern auch in der Distanz oder Auslenkung begrenzt werden, um zu vermeiden, dass Teile des Antriebsaggregates in unerwünschter Weise an der Fahrzeug-Karosserie oder dem Fahrwerk anschlagen. Außerdem ist es erwünscht, dass solche Lagerungen akustisch dämpfend wirken.

Die DE 10 2011 081 836 beschreibt eine elektrisch angetriebene Hinterachse eines zweispurigen Fahrzeugs mit den Rädern zugeordneten Antriebswellen und einem Achsträger mit mehreren daran befestigten radführenden Lenkern, wobei zumindest ein Elektromotor am Achsträger befestigt ist und weiterhin ein Elemente zur Bereitstellung elektrischer Energie für den Elektromotor enthaltendes Gehäuse am Achsträger befestigt ist oder einen Bestandteil des Achsträgers in Form eines Grundkörpers bildet. Zumindest ein vorderer und ein hinterer, sich über die Fahrzeugmittenebene, über einen größeren Teil der Fahrzeugbreite erstreckender Querträger sind vorhanden, in deren beiden Endbereichen Lager zur Anbindung einer Achse am Fahrzeugaufbau vorgesehen sind. Damit ist eine hohe Verwindungssteifigkeit erzielbar. Vorzugsweise ist der Antriebs-Elektromotor des Fahrzeugs bzw. die elektrische Antriebseinheit, die weiterhin ein dem Elektromotor nachgeschaltetes Getriebe und ein Differential aufweisen kann, ebenfalls über elastische Lager am Achsträger befestigt. Vorzugsweise sind hierfür drei Lagerstellen vorgesehen, von denen zwei auf einer Seite der Antriebseinheit, die einer der Fahrzeug-Längsseiten zugewandt ist, möglichst weit voneinander beabstandet sind, so dass diese beiden Lager das Motor-Antriebsmoment bestmöglich abstützen können. Das dritte Lager ist vorzugsweise auf der anderen Seite der Antriebseinheit möglichst mittig bzw. nahe deren Masseschwerpunkt angeordnet und insbesondere für die Aufnahme der Gewichtskräfte ausgelegt, wobei dann, wenn dieses dritte Lager hydraulisch dämpft, die Eigenschwingungen der elektrischen Antriebseinheit gegenüber der Achse wirkungsvoll begrenzt werden können.

Ganz allgemein ist bekannt, dass bei Antriebsaggregaten, besonders beim Fahren auf unebener Fahrbahn, eine als Stuckern bezeichnete translatorische Schwingung in z-Richtung, also entlang der Hochachse des Fahrzeugs auftreten kann. Die Ursache dafür ist die Schwingung des Aggregats innerhalb der Aggregatelager. Deshalb wird die Hubeigenfrequenz normalerweise so gelegt, dass Sie unterhalb der Eigenfrequenzen des Fahrwerks liegt, was als unterkritische Auslegung bezeichnet wird. Folglich liegt das Stuckern im Bereich von Schwingungsfrequenzen von 9 bis13 Hertz, was gleichzeitig der Anregungsfrequenz einer Fahrbahn entspricht. Da das Auftreten von Stuckerschwingungen für den Fahrkomfort eines Kraftfahrzeugs nicht akzeptabel ist, müssen diese gedämpft werden. Bei Verbrennungsmotoren werden dazu gewöhnlich Hydrolager verwendet, welche exakt auf das beim Kraftfahrzeug auftretende Frequenzband der Stuckerschwingungen abgestimmt sind.

Bei Hybridantrieben, mit im Antriebsaggregat kombiniert verbautem Elektro- und Verbrennungsmotor, kommen Schwingungsanregungen sowohl vom Verbrennungsmotor wie auch vom Elektromotor und natürlich von der Fahrbahn. Deshalb ist eine Lösung zur Schwingungstilgung mit Hydrolagern eher ungeeignet, da deren Steifigkeit stark frequenzabhängig ist. Bei höheren Frequenzen nimmt die Steifigkeit der Hydrolager drastisch zu, was dazu führt, dass die hochfrequenten Anregungen des Elektromotors nicht mehr gedämpft werden.

Die DE 10 2011 002 014 A1 beschreibt eine Einrichtung und ein Verfahren zur Führung eines Rades eines Fahrzeugs. Das Verfahren erzeugt eine Dämpfungskraft eines Schwingungsdämpfers in Abhängigkeit von der Amplitude und/oder von der Frequenz einer Radkraftschwankung. Die Beschränkung der Dämpfungskraft kann beispielsweise nur für bestimmte Amplituden und/oder Frequenzbereiche der Radkraftschwankung vorgenommen werden.

Ausgehend vom vorgenannten Stand der Technik, ist es Aufgabe der Erfindung, für ein Kraftfahrzeug mit einem Hybridantrieb aus Elektromotor und Verbrennungsmotor, beide zusammengebaut in einem Antriebsaggregat, dessen Aufhängung bzw. Befestigung im Kraftfahrzeug so zu optimieren, dass auf einfache Weise beim Betrieb größtmöglicher Komfort für die Insassen erreicht wird, durch eine effektive Dämpfung von Stuckerschwingungen und eine Verhinderung der Übertragung von Schwingungen aus dem Betreib des Elektromotors an die Karosserie, ohne dabei im System aktive Elemente zu verwenden.

Die Aufgabe wird erfindungsgemäß mit den kennzeichnenden Merkmalen des Anspruchs 1 gelöst. Weitere Ausgestaltungen der Erfindung ergeben sich aus den abhängigen Ansprüchen.

Nach der Erfindung ist Kraftfahrzeugantrieb mit einem Antriebsaggregat, bestehend wenigstens aus einem Verbrennungsmotor, einem Elektromotor, einem Getriebe, mit einer in Fahrzeugquerrichtung liegenden Abtriebswelle, und einem Hochvolt - Startergenerator, sowie mit einer Befestigungseinrichtung für das Antriebsaggregat, zu dessen schwingfähigem Festlegen an einer Karosserie und/oder einem Fahrwerk eines Kraftfahrzeugs, mittels Schwingungen dämpfenden Elementen, wovon wenigstens vier in Traglagern verbaut sind, dadurch gekennzeichnet, dass wenigstens ein Schwingungsdämpfer zwischen Antriebsaggregat und Karosserie oder Fahrwerk so eingebracht ist, dass dessen Schwingungsdämpfung, in Richtung einer Hochachse des Kraftfahrzeugs mit einer Dämpfungskennlinie wirkt, die so gestaltet ist, dass eine Dämpfungswirkung erfolgt für Schwingungen des Aggregats, angeregt durch Fahrbahnungleichförmigkeiten, während für Schwingungen, angeregt von Drehungleichförmigkeiten des Antriebsaggregats, keine Dämpfungswirkung erfolgt.

Das hat den Vorteil, dass Stuckerschwingungen, mittels einem oder mehreren in Richtung der Fahrzeughochachse wirkenden Schwingungsdämpfern, unterbunden werden, ohne den Schwingungskomfort der Aggregatlagerung durch weitere Krafteinleitung in die Karosserie zu beeinträchtigen. Ein Grund dafür ist, dass die Schwingungsanregungen aus der Drehungleichförmigkeit des Elektromotors und des Verbrennungsmotors kleinere Amplituden aufweisen, als die niederfrequenteren Schwingungsanregungen aus dem Fahrweg erzeugen, die größere Amplituden haben. Somit wird mittels der Schwingungsdämpfer ein Stuckern gedämpft, während Anregungen aus der Drehungleichförmigkeit nicht gedämpft bzw. an die Karosserie / das Fahrwerk übertragen werden.

Eine bevorzugte Ausführung der Erfindung sieht vor, dass der Schwingungsdämpfer zwischen Antriebsaggregat und Karosserie oder Fahrwerk so eingebracht ist, dass der Befestigungspunkt des Schwingungsdämpfers am Antriebsaggregat über dessen Schwerpunkt angeordnet ist, um kein zusätzliches Drehmoment einzuleiten. Alternativ dazu können auch zwei Dämpfer zwischen Antriebsaggregat und Karosserie oder Fahrwerk eingebracht sein, wobei deren Befestigungspunkte am Antriebsaggregat auf dessen Torque-Roll-Achse angeordnet sind. So wird die Achse bezeichnet, um die sich das Aggregat bei Momentenanforderung dreht. Bei einer solchen Lagerung sind die Schwingungsdämpfer keiner oder nur geringer Drehmomentenbelastung ausgesetzt. Vorteilhafterweise ist dieses Drehmoment ein freies Moment und deshalb ist die Abstützung entlang der Torque/Roll-Achse bei gleicher Wirkung frei verschiebbar. Aus einer solchen Lage der Schwingungsdämpfer auf der Torque-Roll-Achse des begrenzt frei im Raum beweglichen Antriebsaggregats resultieren Komfortsteigerungen, insbesondere auch bei Start und Stop und verschiedenen Fahrmanövern, wie auch Lastwechseln und dynamischem Anfahren.

Bei weiteren vorteilhaften Ausführungsformen der Erfindung ist der Schwingungsdämpfer ein Gasdruckdämpfer. Er kann weiterhin so gestaltet sein, dass er erst ab einer Auslenkung mit einer festgelegten Mindestamplitude eine Dämpfungskraft erzeugt. Ein solches, so genanntes voreingestelltes Spiel bewirkt, dass die Dämpferwirkung nur bei den zu dämpfenden, großen Amplituden erfolgt. Somit wird das Stuckern gedämpft, während die Anregungen aus der Drehungleichförmigkeit nicht gedämpft bzw. an die Karosserie / das Fahrwerk übertragen werden.

Im Folgenden wird die Erfindung anhand eines bevorzugten Ausführungsbeispiels weiter erläutert, wobei die beigefügten Figuren ein Hybrid-Antriebsaggregat und dessen erfindungsgemäße Befestigungseinrichtung als Heckeinbau für ein Kraftfahrzeug zeigen. Es sind nur wesentliche Teile dargestellt. Erfindungswesentlich können hier sämtliche näher beschriebenen Merkmale sein. Es zeigen:
- Figur 1:: eine Befestigungseinrichtung, als Seitenansicht, zum Festlegen eines Hybrid-Antriebsaggregats in einem Kraftfahrzeug nach der Erfindung und
- Figur 2:: die Befestigungseinrichtung zum Festlegen des Hybrid- Antriebsaggregats nach Figur 1, in einem Kraftfahrzeug, in einer Draufsicht von oben.

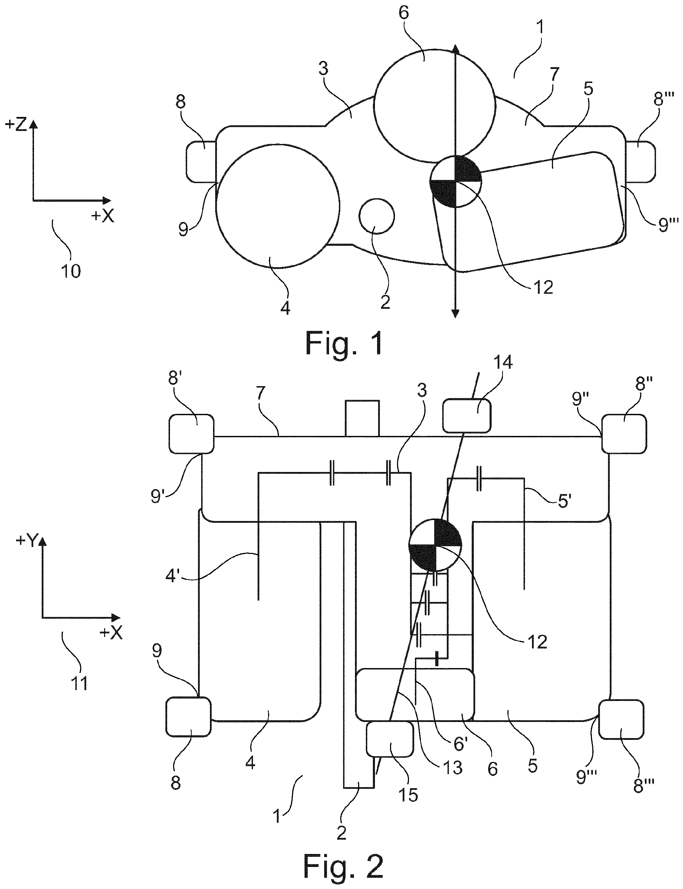

Die Figuren 1 und 2 zeigen eine Befestigungseinrichtung zum Festlegen eines Hybrid-Kraftfahrzeug-Antriebsaggregats 1, vorteilhafterweise quer eingebaut im Heck eines nicht gezeichneten Kraftfahrzeugs, zum Antrieb dessen Hinterräder mittels einer Abtriebswelle 2 eines Getriebes 3, das sowohl von einem Elektromotor 4, als auch von einem Verbrennungsmotor 5 über Eingangswellen 4', 5' mit Drehmoment beaufschlagt werden kann. Das Getriebe 3 kann zusätzlich noch über eine weitere Eingangswelle 6' durch einen Hochvolt-Startergenerator 6 angetrieben werden, insbesondere zum Starten des Verbrennungsmotors 5. Außerdem dient der Hochvolt-Startergenerator 6 zur Stromerzeugung bei Antrieb durch den Verbrennungsmotor 5 über die Eingangswelle 5'. Die Abtriebswelle 2 des Getriebes 3 überträgt das Antriebsdrehmoment des Hybrid-Kraftfahrzeug-Antriebsaggregats 1 auf nicht gezeichnete Antriebswellen, verbunden mit nicht gezeichneten Hinterrädern als Heckantrieb für das Kraftfahrzeug.

Das Hybrid-Kraftfahrzeug-Antriebsaggregat 1 aus besteht aus Elektromotor 4, Verbrennungsmotor 5, Getriebe 3 und Hochvolt-Startergenerator 6, in einem gebauten Gehäuse 7, das mittels, nicht gezeichneten, Schwingungen dämpfenden Elementen, wovon vier in Traglagern 8, 8', 8", 8"', jeweils eines an einer Außenecke 9, 9', 9", 9'" des Gehäuses 7 festgelegt sind. An einer nicht dargestellten Karosserie und/oder einem Fahrwerk des Kraftfahrzeugs sind die vier Traglager 8, 8', 8", 8'" angebracht, indem die beiden nach hinten, in +X Richtung, weisenden Traglager 8", 8'" an nicht gezeichneten Längsträgern der Kraftfahrzeugkarosserie befestigt sind und eines der beiden nach vorne, in -X und -Y Richtung, weisenden Traglager 8 an einem nicht gezeichneten Querträger eines Hinterachsmoduls. Während das andere nach vorne, in -X und +Y Richtung, weisende Traglager 8' an einem nicht gezeichneten Längsträger des Hinterachsmoduls angebracht ist.

Die in beiden Figuren eingezeichneten Koordinatenkreuze 10, 11 stellen ein Kraftfahrzeug internes Koordinatensystem dar, mit +X in Längsrichtung, gegen die Fahrtrichtung weisend, Y in Querrichtung weisend und +Z in Hochrichtung, nach oben weisend, während ein Markierungspunkt 12 die Position eines Gesamtschwerpunkts des Antriebsaggregats 1 kennzeichnet und eine Linie eine Achse 13 kennzeichnet, um die sich das Antriebsaggregat 1 bei Momentenanforderung dreht. Diese Achse einer schwingfähigen Antriebslagerung wird auch als Torque-Roll-Achse 13 bezeichnet.

Auf dieser Torque-Roll-Achse 13 sind Befestigungspunkte 14, 15 zweier nicht näher dargestellter Schwingungsdämpfer, nach dem zitierten Stand der Technik, am Antriebsaggregat 1 platziert, die Schwingungsdämpfer so eingebracht zwischen dem Antriebsaggregat 1 und einer Karosserie oder einem Fahrwerk, dass deren Schwingungsdämpfung, in Richtung der Hochachse Z des Kraftfahrzeugs mit einer Dämpfungskennlinie wirkt, die so gestaltet ist, dass eine Dämpfungswirkung erfolgt, für Schwingungen des Antriebsaggregats 1, angeregt durch Fahrbahnungleichförmigkeiten, während für Schwingungen, angeregt von Drehungleichförmigkeiten des Antriebsaggregats 1, keine Dämpfungswirkung erfolgt.

Da sich die genannten Schwingungen in ihrer Amplitude und Frequenz unterscheiden, ist es auch möglich, dass die Schwingungsdämpfer so gestaltet sind, dass diese erst ab einer Auslenkung mit einer festgelegten Mindestamplitude eine Dämpfungskraft erzeugen. Dabei ist es vorteilhaft, wenn die Schwingungsdämpfer Gasdruckdämpfer sind.

Allerdings ist es erfindungsgemäß auch möglich, nur einen Schwingungsdämpfer (nicht gezeichnet) zwischen Antriebsaggregat und Karosserie oder Fahrwerk einzubringen. In diesem Fall muss dann der Befestigungspunkt des Schwingungsdämpfers am Antriebsaggregat über dessen Schwerpunkt (12) angeordnet sein.

## Patentansprüche

1. Kraftfahrzeugantrieb mit einem Antriebsaggregat (1), bestehend wenigstens aus einem Verbrennungsmotor (5), einem Elektromotor (4), einem Getriebe (3) mit einer in Fahrzeugquerrichtung (Y) liegenden Abtriebswelle (2) und einem Hochvolt - Startergenerator (6), sowie mit einer Befestigungseinrichtung für das Antriebsaggregat (1), zu dessen schwingfähigem Festlegen an einer Karosserie und/oder einem Fahrwerk eines Kraftfahrzeugs, mittels Schwingungen dämpfenden Elementen, wovon wenigstens vier in Traglagern (8, 8', 8", 8"') verbaut sind, **dadurch gekennzeichnet, dass** wenigstens ein Schwingungsdämpfer zwischen Antriebsaggregat (1) und Karosserie oder Fahrwerk so eingebracht ist, dass dessen Schwingungsdämpfung, in Richtung einer Hochachse (Z) des Kraftfahrzeugs mit einer Dämpfungskennlinie wirkt, die so gestaltet ist, dass eine Dämpfungswirkung erfolgt, für Schwingungen des Antriebsaggregats (1), angeregt durch Fahrbahnungleichförmigkeiten, während für Schwingungen des Antriebsaggregats (1), angeregt von Drehungleichförmigkeiten des Verbrennungsmotors 5 und/oder Elektromotors (4), keine Dämpfungswirkung erfolgt.

2. Kraftfahrzeugantrieb nach Anspruch 1, **dadurch gekennzeichnet, dass** der Schwingungsdämpfer zwischen Antriebsaggregat (1) und Karosserie oder Fahrwerk so eingebracht ist, dass der Befestigungspunkt des Schwingungsdämpfers am Antriebsaggregat (1) über dessen Schwerpunkt (12) angeordnet ist.

3. Kraftfahrzeugantrieb nach Anspruch 1, **dadurch gekennzeichnet, dass** zwei Schwingungsdämpfer zwischen Antriebsaggregat (1) und Karosserie oder Fahrwerk eingebracht sind, wobei deren Befestigungspunkte (14, 15) am Antriebsaggregat (1) auf dessen Torque-Roll-Achse (13) angeordnet sind.

4. Kraftfahrzeugantrieb nach einem der Ansprüche 1 bis 3, **dadurch gekennzeichnet, dass** der Schwingungsdämpfer ein Gasdruckdämpfer ist.

5. Kraftfahrzeugantrieb nach einem der Ansprüche 1 bis 4, **dadurch gekennzeichnet, dass** der Schwingungsdämpfer so gestaltet ist, dass dieser erst ab einer Auslenkung mit einer festgelegten Mindestamplitude eine Dämpfungskraft erzeugt.
